# EUROPÄISCHE PATENTANMELDUNG

(11) **EP 4 032 389 A1**
(43) Veröffentlichungstag der Anmeldung: **27.07.2022**
(21) Anmeldenummer: 21202557.1
(22) Anmeldetag: 14.10.2021
(51) Int. Cl.: A01D 41/127, A01B 79/00, G06N 3/08

(54) **SYSTEM ZUR BESTIMMUNG EINES BRUCHKORNANTEILS**

(30) Priorität: 21.01.2021 DE 102021101219
(71) Anmelder: CLAAS Selbstfahrende Erntemaschinen GmbH, 33428 Harsewinkel (DE)
(72) Erfinder: Töniges, Torben, 33602 Bielefeld (DE); Fischer, Frédéric, 59759 Arnsberg (DE); Kettelhoit, Boris, 33335 Gütersloh (DE); Witte, Johann, 58730 Fröndenberg (DE)
(74) Vertreter: CLAAS Gruppe

(57) **Zusammenfassung**

System (15) zur Bestimmung eines Bruchkornanteils einer Menge von Körnern, umfassend zumindest eine Kamera (16) und eine Recheneinheit (17), wobei die Kamera (16) dazu vorgesehen und eingerichtet ist ein Bild der Menge von Körnern (S) zu erstellen, wobei die Recheneinheit (17) dazu vorgesehen und eingerichtet ist das Bild auszuwerten, wobei die Recheneinheit (17) dazu vorgesehen und eingerichtet ist eine künstliche Intelligenz (KI) zur Auswertung des Bildes zu nutzen, wobei die künstliche Intelligenz (KI) dazu vorgesehen und eingerichtet ist Bruchkörner in dem Bild zu bestimmen, wobei die Recheneinheit (17) dazu vorgesehen und eingerichtet ist den Bruchkornanteil der Menge an Körnern in dem Bild zu bestimmen.

## Beschreibung

Die Erfindung betrifft System zur Bestimmung eines Bruchkornanteils einer Menge von Körnern.

Aus der EP2742791 B1 ist ein System mit einer Kamera bekannt, wobei in dem Bild der Bruchkornanteil bestimmt werden kann.

Aufgabe der Erfindung ist es einen Bruchkornanteil einer Menge von Körnern zu bestimmen.

Gelöst wird die Aufgabe durch ein System zur Bestimmung eines Bruchkornanteils einer Menge von Körnern, umfassend zumindest eine Kamera und eine Recheneinheit, wobei die Kamera dazu vorgesehen und eingerichtet ist ein Bild der Menge von Körnern zu erstellen, wobei die Recheneinheit dazu vorgesehen und eingerichtet ist das Bild auszuwerten, wobei die Recheneinheit dazu vorgesehen und eingerichtet ist eine künstliche Intelligenz zur Auswertung des Bildes zu nutzen, wobei die künstliche Intelligenz dazu vorgesehen und eingerichtet ist Bruchkörner in dem Bild zu bestimmen, wobei die Recheneinheit dazu vorgesehen und eingerichtet ist den Bruchkornanteil der Menge an Körnern in dem Bild zu bestimmen.

Unter einer Kamera wird hier jeder optische Sensor, der mindestens zweidimensionale Sensordaten ausgibt, verstanden. Die entsprechenden Sensordaten werden als Bild bezeichnet. Eine Kamera kann also sowohl eine klassische Kamera sein, als auch ein LiDAR-Sensor.

Die künstliche Intelligenz umfasst ein Modell zur Erkennung von Objekten in Bildern. Die künstliche Intelligenz wurde mit einer Vielzahl von Bildern trainiert. Dabei wurden in der Vielzahl von Bildern manuell Bruchkörner gekennzeichnet und beim Training durch ein mathematisches Verfahren Parameter des Modells so bestimmt, dass die künstliche Intelligenz in Bildern Bruchkörner erkennen kann. Ganze Körner können ebenfalls mittels der künstlichen Intelligenz oder mittels klassischer Bildverarbeitung, bspw. mittels Wasserscheidentransformation, erkannt werden. Aus den erkannten Körnern und Bruchkörnern wird dann der Bruchkornanteil in den Bildern bestimmt. Weiterhin ist es möglich die künstliche Intelligenz zur Erkennung von Nicht-Korn-Objekten, bspw. Stroh, einzusetzen. Die Erkennung von Nicht-Korn-Objekten verhindert, dass diese Objekte in der klassischen Bildverarbeitung als Körner erkannt werden.

Vorzugsweise umfasst die künstliche Intelligenz ein tiefes neuronales Netz, dies wird auch als Deep Learning bezeichnet. Andere Architekturen zur Erstellung der künstlichen Intelligenz sind möglich.

Der Bruchkornanteil kann als Anteil der Bruchkörner an allen erkannten ganzen Körnern und Bruchkörnern in den Bildern angegeben werden. Dazu werden die ganzen Körner und die Bruchkörner gezählt. Der Bruchkornanteil ergibt sich dann aus der Anzahl der Bruchkörner geteilt durch die Summe der ganzen Körner und der Bruchkörner. Dieser Bruchkornanteil hat den Vorteil, dass er sehr leicht zu bestimmen ist.

Da die Bruchkörner im Allgemeinen kleiner sind als die ganzen Körner ist es bevorzugt den Bruchkornanteil als Flächenanteil auszugeben. Dazu werden die Flächen der ganzen Körner und der Bruchkörner in den Bildern, bspw. als Pixelzahl in digitalen Bildern, bestimmt. Der Bruchkornanteil ergibt sich dann als Summe der Flächen der Bruchkörner geteilt durch die Summe der Flächen der ganzen Körner und der Bruchkörner.

Da die Körner dreidimensional sind, ist es besonders bevorzugt den Bruchkornanteil als Volumenanteil auszugeben. Bei Nutzung einer Kamera, die dreidimensionale Sensordaten als Bild liefert, bspw. eine Stereokamera oder ein LiDAR-Sensor, können diese Daten zur Bestimmung der Volumina der Körner und Bruchkörner genutzt werden. Alternativ können bei zweidimensionalen Daten die Volumina der Bruchkörner und der ganzen Körner aus den Flächen der Bruchkörner und der ganzen Körner approximiert werden. Die Approximation kann dabei von der Art der Körner abhängen. Die Art der Körner kann dabei manuell vorgegeben oder automatisch aus den Bildern bestimmt werden. Alternativ kann die Art der Körner aus einem Farm Management System bezogen werden, wobei in dem Farm Management System die Art der angebauten Pflanzen für den Einsatzort des Systems hinterlegt ist. Der Bruchkornanteil ergibt sich dann als Summer der Volumina der Bruchkörner geteilt durch die Summer der Volumina der ganzen Körner und der Bruchkörner.

Unter der Annahme einer konstanten Dichte ist der Bruchkornanteil als Volumenanteil identisch zu einem Bruchkornanteil als Massenanteil. Der Bruchkornanteil kann der mit der gleichen Methode auch als Massenanteil ausgegeben werden.

In einer bevorzugten Ausgestaltung ist die Kamera Teil eines mobilen Gerätes, insbesondere eines Smartphones oder eines Mähdreschers. Die Nutzung einer Kamera, die Teil eines mobilen Gerätes ist, ermöglicht eine flexible Bildaufnahme. Mit einem Smartphone ist es dem Nutzer möglich an jedem Ort an dem er sich befindet Bilder von ganzen Körnern und Bruchkörnern aufzunehmen, bspw. von Kornproben aus einem Mähdrescher. Eine Kamera in einem Mähdrescher kann so in den Mähdrescher eingebaut werden, dass automatisch Bilder der geernteten Körner aufgenommen werden. Bspw. können vom Kornelevator in den Korntank beförderte Körner automatisch fotografiert werden.

Die Recheneinheit ist bevorzugt Teil des mobilen Gerätes. Wenn Kamera und Recheneinheit Teil desselben mobilen Gerätes sind, kann die Auswertung der Bilder vor Ort erfolgen.

Besonders bevorzugt ist die Recheneinheit von dem mobilen Gerät entfernt. Außerhalb von mobilen Geräten, wie Smartphones oder Mähdreschern, können häufig größere Rechenleistungen günstiger vorgehalten werden. Das von der Kamera im mobilen Gerät aufgenommene Bild wird bspw. per Funk an die Recheneinheit übertragen und dort ausgewertet. Die Recheneinheit kann sich bspw. in einem Rechenzentrum eines Dienstleisters befinden. Der Bruchkornanteil, und ggf. weitere Auswertungsergebnisse, können dann an das mobile Gerät zurückgeschickt werden.

In einer bevorzugten Ausgestaltung umfasst das System eine Lerneinheit, wobei die Lerneinheit dazu vorgesehen und eingerichtet ist mittels der Bilder die künstliche Intelligenz zu verbessern. Die Bilder werden also zum einen von der künstlichen Intelligenz ausgewertet, zum anderen werden die Bilder zur Verbesserung der künstlichen Intelligenz genutzt. Zur Verbesserung werden die Bilder manuell annotiert, das heißt es werden manuell die Bruchkörner im Bild gekennzeichnet, und die künstliche Intelligenz damit trainiert.

Bevorzugt ist die Lerneinheit Teil einer von dem mobilen Gerät entfernten Recheneinheit. Da das Trainieren einer künstlichen Intelligenz häufig große Rechenleistung erfordert, ist die Lerneinheit bevorzugt Teil eines von dem mobilen Gerät entfernten Rechners.

Bevorzugt ist das System dazu vorgesehen und eingerichtet den Bruchkornanteil über eine Ausgabeschnittstelle, insbesondere eine Anzeigegerät, auszugeben. Der Bruchkornanteil kann dem Nutzer zur Kenntnis gebracht werden und/oder an andere Systeme zur Weiterverarbeitung übergeben werden. Bspw. kann der Bruchkornanteil von einem Smartphone an einen Mähdrescher übergeben werden.

Bevorzugt umfasst das System einen Mähdrescher mit zumindest einem Arbeitsaggregat, insbesondere einem Dreschwerk, und das System ist dazu vorgesehen und eingerichtet zumindest eine Einstellung des Arbeitsaggregates auf Basis des Bruchkornanteils zu steuern oder zu regeln. Die Regelung des Arbeitsaggregates kann dabei direkt durch die Recheneinheit erfolgen oder die Recheneinheit gibt den Bruchkornanteil oder einen davon abgeleiteten Wert weiter an eine Regelungseinheit.

Bevorzugt umfasst das System eine Unterlage, wobei die Unterlage dazu vorgesehen und eingerichtet ist, die Körner, vorzugsweise in gleicher Orientierung, aufzunehmen und die Kamera dazu vorgesehen und eingerichtet ist die Körner auf der Unterlage zu fotografieren. Die Unterlage bietet einen definierten Hintergrund. Dies ermöglicht eine bessere Erkennung der Körner und Bruchkörner und damit eine bessere Bestimmung des Bruchkornanteils. Eine bevorzugte gleiche Orientierung bedeutet, dass die jeweils längste Achse der Körner parallel ausgerichtet wird. Dazu kann die Unterlage Erhebungen aufweisen, an denen die Körner ausgerichtet werden können.

Bevorzugt ist das System dazu vorgesehen und eingerichtet bei der Auswertung der Bilder Anhäufungen von Körnern auszublenden. Bei Anhäufungen von Körnern verdecken einige Körner andere Körner teilweise, was die Erkennung von Bruchkörnern erschwert. Durch das Ausblenden von Anhäufungen werden nur Einzellagen von Körnern und Bruchkörnern ausgewertet und damit die Bestimmung des Bruchkornanteils verbessert.

Weiterhin betrifft die Erfindung ein Verfahren zur Bestimmung eines Bruchkornanteils einer Menge von Körnern, wobei das Verfahren mit einer Kamera und einer Recheneinheit durchgeführt wird, wobei die Kamera ein Bild der Körner erstellt, wobei die Kamera das Bild an die Recheneinheit übermittelt, wobei die Recheneinheit das Bild mit einer künstlichen Intelligenz auswertet, wobei die künstliche Intelligenz Bruchkörner in dem Bild bestimmt, wobei die Recheneinheit den Bruchkornanteil der Menge an Körnern in dem Bild bestimmt.

Bevorzugt wird das Bild von der Kamera an eine Lerneinheit übermittelt, wobei die Lerneinheit mit dem Bild die künstliche Intelligenz verbessert. Das Bild wird dabei manuell annotiert und die künstliche Intelligenz von der Lerneinheit mit dem annotierten Bild trainiert.

Bevorzugt wird basierend auf dem Bruchkornanteil ein Arbeitsaggregat, insbesondere eines Mähdreschers, gesteuert oder geregelt. Die Steuerung kann dabei manuell durch einen Bediener erfolgen, an den der Bruchkornanteil ausgegeben wird. Bevorzugt wird das Arbeitsaggregat automatisch geregelt.

Die Erfindung wird nachstehend anhand eines Ausführungsbeispiels näher erläutert. Die Figuren zeigen in
- Fig. 1:: eine landwirtschaftliche Erntemaschine mit einem erfindungsgemäßen System,
- Fig. 2:: ein erfindungsgemäßes System,
- Fig. 3:: ein Bild von Körnern,
- Fig. 4:: schematisch einen beispielhaften Ablauf eines erfindungsgemäßen Verfahrens,
- Fig. 5:: ein weiteres Bild von Körnern.

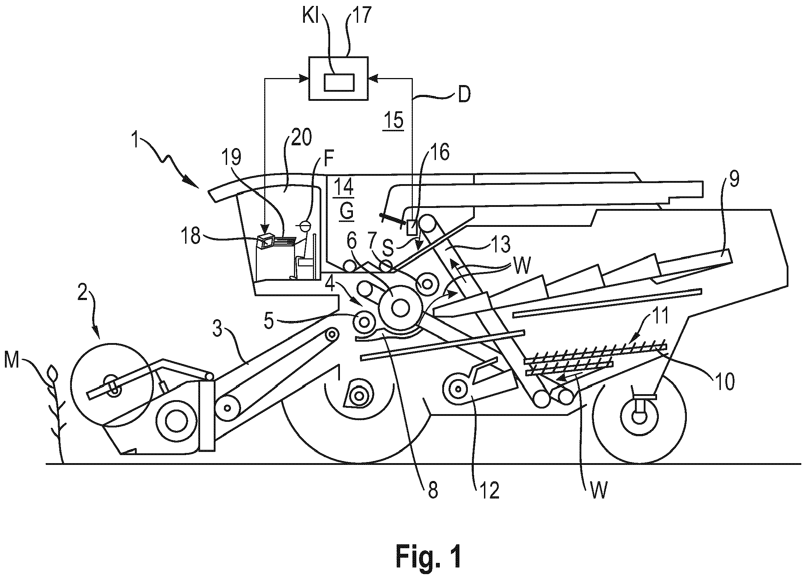

Fig. 1 zeigt in schematischer Darstellung eine selbstfahrende landwirtschaftliche Erntemaschine 1. Bei dem dargestellten Ausführungsbeispiel handelt es sich um einen Mähdrescher 1. Das System 15 besteht im Wesentlichen aus zwei Komponenten, einer Kamera 16 und einer Recheneinheit 17. Mit der Kamera 16 werden, vor Abgabe von Körnern S in einen Korntank 14, von den Körnern S Bilder oder Bildserien erzeugt. Die Kamera ist in diesem Beispiel eine digitale Farbkamera und die Bilder sind zweidimensionale Farbbilder. Die erzeugten Bilder oder Bildserien werden der Recheneinheit 17 zugeführt. In der Recheneinheit 17 werden die Bilder oder Bildserien zur Erkennung von Bruchkörnern mittels einer künstlichen Intelligenz KI analysiert. Aufgrund der Analyseergebnisse kann eine automatische oder manuelle Beeinflussung der Einstellparameter von Arbeitsaggregaten des Mähdreschers 1 durch die Recheneinheit 17 erfolgen. Die Beeinflussung dient dem Erhalt einer möglichst gleichbleibenden Qualität des Erntegutes G im Korntank 14. Das erfindungsgemäße System 15 ist aber ausdrücklich nicht nur auf Mähdrescher 1 beschränkt.

Erntematerial M wird mit den bekannten Mitteln eines Schneidwerkes 2 und eines Schrägförderers 3 vom Mähdrescher 1 aufgenommen und mit den bekannten Arbeitsaggregaten, wie einem Dreschorgan 4, bestehend aus einer Vorbeschleunigertrommel 5, einer Dreschtrommel 6, einer Wendetrommel 7, einem Dreschkorb 8 und einer Abscheideeinrichtung, bestehend aus einem Schüttler 9, einem Überkehrbereich 10 und einer Reinigungseinrichtung 11 mit einem Gebläse 12, bearbeitet, um das Erntegut G zu erhalten. Auf dem Ernteguttransportweg W wird der Erntegutstrom S über einen Kornelevator 13 dem Korntank 14 zugeführt.

Das System 15 zur Bestimmung eines Bruchkornanteils umfasst eine Kamera 16, sowie eine Recheneinheit 17, die über eine Datenleitung D miteinander verbunden sind. Die Kamera 16 ist, am Beispiel des Mähdreschers 1, im Bereich des Elevatorkopfes des Kornelevators 13 angeordnet. Die Recheneinheit 17 ist im Mähdrescher 1 verbaut. Es wäre allerdings auch möglich eine externe Recheneinheit zu nutzen und die Datenleitung D als Funkstrecke auszubilden.

Die der Recheneinheit 17 zugeführten Bilder oder Bildserien oder die Analyseergebnisse können von der Recheneinheit 17 wiederum an eine Benutzerschnittstelle, bestehend aus einer Anzeigegerät/Display 18 und einer Bedieneinrichtung 19, in der Fahrerkabine 20 des Mähdreschers 1 weitergeleitet werden. Dort können die Bilder oder Bildserien beispielsweise einem Bediener F der selbstfahrenden landwirtschaftlichen Erntemaschine 1 angezeigt werden, so dass dieser beispielsweise eine manuelle Veränderung beziehungsweise Optimierung der Einstellparater der Arbeitsaggregate 4, 5, 6, 7, 8, 9, 10, 11, 12 vornehmen kann. Eine Veränderung der Einstellparameter der Arbeitsaggregate 4, 5, 6, 7, 8, 9, 10, 11, 12 kann je nach Voreinstellung in der Bedieneinrichtung 19 auch automatisch von der Recheneinheit 17 vorgenommen werden.

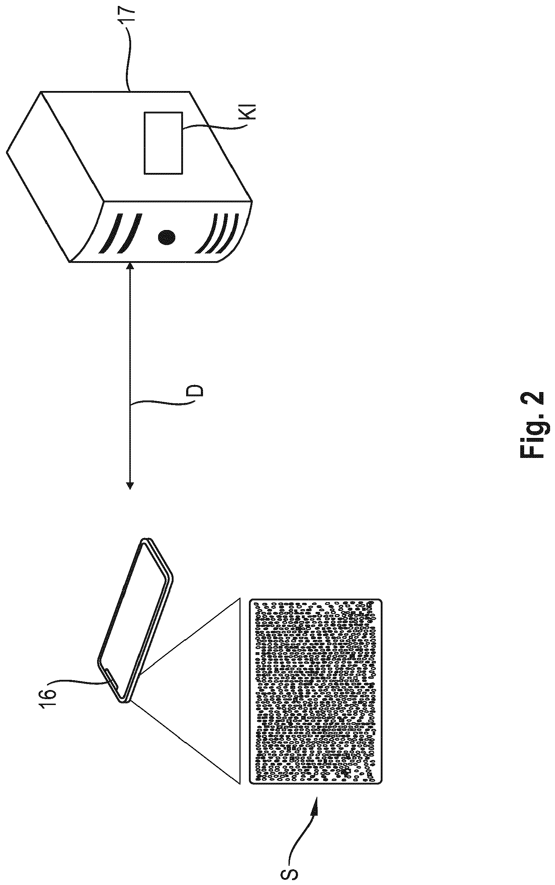

Figur 2 zeigt ein alternatives erfindungsgemäßes System. Das System 15 umfasst eine Kamera 16, hier in einem Smartphone, und eine Recheneinheit 17, hier ein externer Server. Die Kamera ist hier eine Kombination aus einer digitalen Farbkamera und einem LiDAR. Die Sensordaten der Farbkamera und des LiDAR werden in dem Smartphone oder in der Recheneinheit zu einem dreidimensionalen Bild fusioniert. Der Nutzer nimmt mit der Kamera 16 eine Bild von Körnern S auf. Das Bild wird über die Datenleitung D an die Recheneinheit 17 weitergeleitet. Die Recheneinheit 17 wertet das Bild aus, wobei eine künstliche Intelligenz KI Bruchkörner in dem Bild erkennt. Die Recheneinheit bestimmt dann den Bruchkornanteil der Menge an Körnern in dem Bild. Das Ergebnis wird über die Datenleitung D zurück an das Smartphone übermittelt und dem Nutzer angezeigt. Optional wird das Bild in dem Server zum Verbessern der künstlichen Intelligenz genutzt. Dazu befindet sich in dem Server neben der künstlichen Intelligenz KI eine Lerneinheit. Das Bild wird manuell annotiert und der Lerneinheit übergeben. Die Lerneinheit trainiert mit dem Bild die künstliche Intelligenz.

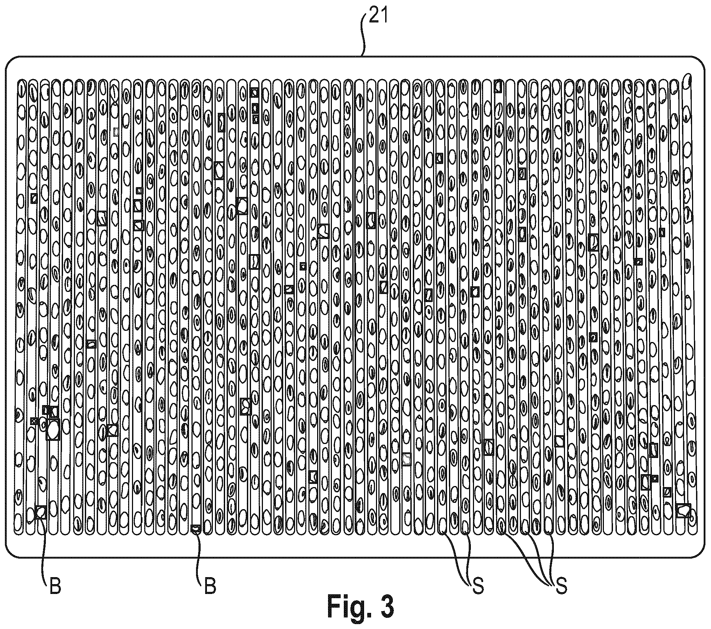

Figur 3 zeigt ein Bild von Körnern S. Die Körner S sind in diesem Beispiel auf einer Unterlage 21 ausgebreitet. Bruchkörner B sind in diesem Bild mit einem Rechteck gekennzeichnet. Mit solchen Bildern wurde die künstliche Intelligenz trainiert. Wird ein ähnliches Bild von Körnern S der Recheneinheit übermittelt, so erkennt die künstliche Intelligenz darin die Bruchkörner B und kennzeichnet diese.

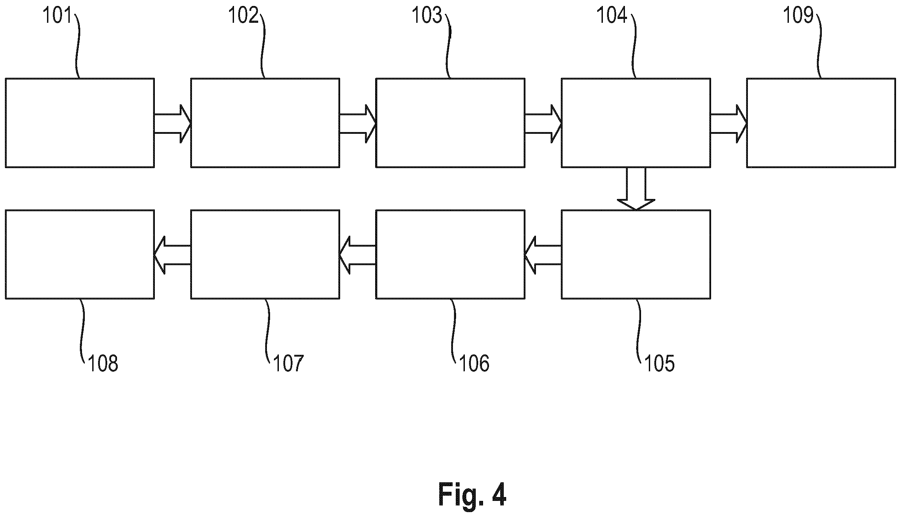

Figur 4 zeigt schematisch einen beispielhaften Ablauf eines erfindungsgemäßen Verfahrens. Vor dem eigentlichen Verfahren werden findet eine manuelle Annotation 101 von Trainingsbildern statt. Mit diesen Bildern wird ein Training 102 der künstlichen Intelligenz durchgeführt. Die trainierte künstliche Intelligenz wird in der Recheneinheit eingesetzt. Im erfindungsgemäßen Verfahren erstellt eine Kamera ein Bild von Körnern 103. Dieses Bild wird von der Kamera an die Recheneinheit übermittelt 104. Die Recheneinheit wertet das Bild aus 105 und erkennt die Körner. Dies geschieht mittels klassischer Bildverarbeitung, bspw. durch Wasserscheidentransformation, oder durch Nutzung der künstlichen Intelligenz. Danach werden in dem Bild durch die künstliche Intelligenz Bruchkörner erkannt 106. Aus den erkannten Körnern und den erkannten Bruchkörnern bestimmt die Recheneinheit den Bruchkornanteil 107. Der Bruchkornanteil kann an den Nutzer ausgegeben, an eine Regeleinheit übermittelt oder direkt zur Steuerung von Arbeitsaggregaten genutzt werden 108. Optional ist es möglich die an die Recheneinheit übermittelten Bilder zu speichern 109, um sie zur Verbesserung der künstlichen Intelligenz zu nutzen.

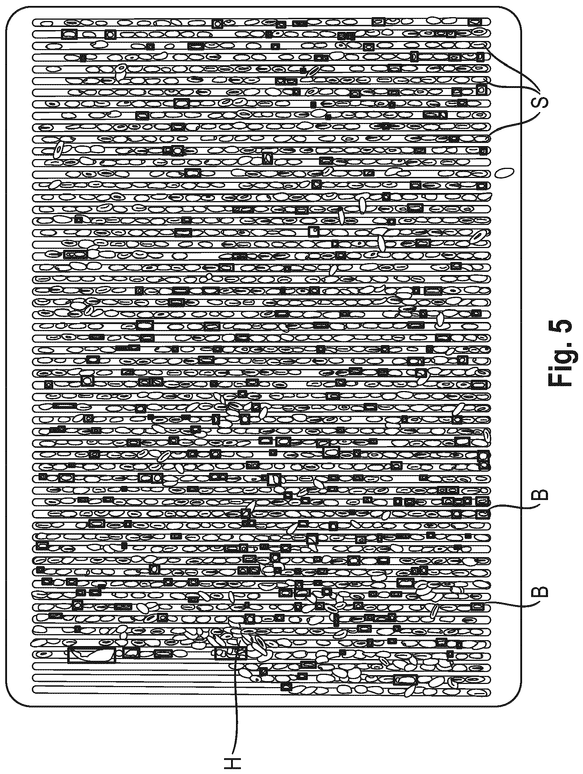

Figur 5 zeigt ein weiteres Bild von Körnern S. Wie in Figur 3 sind Bruchkörner B mit Rechtechecken gekennzeichnet. Am linken Rand des Bildes befindet sich eine Anhäufung H von vielen Körnern, die sich gegenseitig teilweise verdecken. Da dieser Bereich von der künstlichen Intelligenz nur schwer auszuwerten ist, wird dieser Bereich bei der Auswertung des Bildes ausgeblendet. Es wird also der Bruchkornanteil im restlichen Bild bestimmt.

### Bezugszeichenliste

- 1: Mähdrescher
- 2: Schneidwerk
- 3: Schrägförderer
- 4: Dreschorgan
- 5: Vorbeschleunigertrommel
- 6: Dreschtrommel
- 7: Wendetrommel
- 8: Dreschkorb
- 9: Schüttler
- 10: Überkehrbereich
- 11: Reinigungseinrichtung
- 12: Gebläse
- 13: Kornelevator
- 14: Korntank
- 15: System
- 16: Kamera
- 17: Recheneinheit
- 18: Anzeigegerät
- 19: Bedieneinrichtung
- 20: Fahrerkabine
- 21: Unterlage
- KI: Künstliche Intelligenz
- M: Erntematerial
- S: Körner
- G: Erntegut
- W: Ernteguttransportweg
- F: Bediener
- H: Haufen
- 101: Annotation
- 102: Training
- 103: Bild erstellen
- 104: Bild übermitteln
- 105: Bild auswerten
- 106: Bruchkorn erkennen
- 107: Bruchkornanteil bestimmen
- 108: Ergebnis übermitteln
- 109: Bild speichern

## Patentansprüche

1. System (15) zur Bestimmung eines Bruchkornanteils einer Menge von Körnern (S),
umfassend zumindest eine Kamera (16) und eine Recheneinheit (17),
wobei die Kamera (16) dazu vorgesehen und eingerichtet ist ein Bild der Menge von Körnern (S) zu erstellen,
wobei die Recheneinheit (17) dazu vorgesehen und eingerichtet ist das Bild auszuwerten,
**dadurch gekennzeichnet, dass** das die Recheneinheit (17) dazu vorgesehen und eingerichtet ist eine künstliche Intelligenz (KI) zur Auswertung des Bildes zu nutzen,
wobei die künstliche Intelligenz (KI) dazu vorgesehen und eingerichtet ist Bruchkörner (B) in dem Bild zu bestimmen,
wobei die Recheneinheit (17) dazu vorgesehen und eingerichtet ist den Bruchkornanteil der Menge an Körnern (S) in dem Bild zu bestimmen.

2. System (15) nach Anspruch 1,
**dadurch gekennzeichnet, dass** die künstliche Intelligenz (KI) ein trainiertes tiefes neuronales Netz umfasst.

3. System (15) nach einem der vorhergehenden Ansprüche,
**dadurch gekennzeichnet, dass** der Bruchkornanteil als Flächenanteil, Volumenanteil und/oder Massenanteil bestimmt wird.

4. System (15) nach einem der vorhergehenden Ansprüche,
**dadurch gekennzeichnet, dass** die Kamera (16) Teil eines mobilen Gerätes, insbesondere eines Smartphones oder eines Mähdreschers (1), ist.

5. System (15) nach Anspruch 4,
**dadurch gekennzeichnet, dass** die Recheneinheit (17) Teil des mobilen Gerätes ist.

6. System (15) nach Anspruch 4,
**dadurch gekennzeichnet, dass** die Recheneinheit (17) von dem mobilen Gerät entfernt ist.

7. System (15) nach einem der vorhergehenden Ansprüche,
**dadurch gekennzeichnet, dass** das System (15) eine Lerneinheit umfasst, wobei die Lerneinheit dazu vorgesehen und eingerichtet ist mittels der Bilder die künstliche Intelligenz (KI) zu verbessern.

8. System (15) nach Anspruch 7,
**dadurch gekennzeichnet, dass** die Lerneinheit Teil einer von dem mobilen Gerät entfernten Recheneinheit (17) ist.

9. System (15) nach einem der vorhergehenden Ansprüche,
**dadurch gekennzeichnet, dass** das System (15) dazu vorgesehen und eingerichtet ist den Bruchkornanteil über eine Ausgabeschnittstelle, insbesondere ein Anzeigegerät (18), auszugeben.

10. System (15) nach einem der vorhergehenden Ansprüche,
**dadurch gekennzeichnet, dass** das System (15) einen Mähdrescher (1) mit zumindest einem Arbeitsaggregat (4, 5, 6, 7, 8, 9, 10, 11, 12), insbesondere einem Dreschwerk (4), umfasst und das System (15) dazu vorgesehen und eingerichtet ist zumindest eine Einstellung des Arbeitsaggregates (4, 5, 6, 7, 8, 9, 10, 11, 12) auf Basis des Bruchkornanteils zu steuern oder zu regeln.

11. System (15) nach einem der vorhergehenden Ansprüche,
**dadurch gekennzeichnet, dass** das System (15) eine Unterlage (21) umfasst, wobei die Unterlage (21) dazu vorgesehen und eingerichtet ist, die Körner, vorzugsweise in gleicher Orientierung, aufzunehmen und die Kamera (16) dazu vorgesehen und eingerichtet ist die Körner auf der Unterlage (21) zu fotografieren.

12. System (15) nach einem der vorhergehenden Ansprüche,
**dadurch gekennzeichnet, dass** das System (15) dazu vorgesehen und eingerichtet ist bei der Auswertung der Bilder Anhäufungen (H) von Körnern auszublenden.

13. Verfahren zur Bestimmung eines Bruchkornanteils einer Menge von Körnern (S),
wobei das Verfahren mit einer Kamera (16) und einer Recheneinheit (17) durchgeführt wird,
wobei die Kamera (16) ein Bild der Körner (S) erstellt,
**dadurch gekennzeichnet, dass**
die Kamera (16) das Bild an die Recheneinheit (17) übermittelt,
wobei die Recheneinheit (17) das Bild mit einer künstlichen Intelligenz (KI) auswertet,
wobei die künstliche Intelligenz (KI) Bruchkörner (B) in dem Bild bestimmt,
wobei die Recheneinheit (17) den Bruchkornanteil der Menge an Körnern in dem Bild bestimmt.

14. Verfahren nach Anspruch 13,
**dadurch gekennzeichnet, dass** das Bild von der Kamera (16) an eine Lerneinheit übermittelt wird, wobei die Lerneinheit mit dem Bild die künstliche Intelligenz (KI) verbessert.

15. Verfahren nach einem der Ansprüche 13 oder 14,
**dadurch gekennzeichnet, dass** basierend auf dem Bruchkornanteil ein Arbeitsaggregat (4, 5, 6, 7, 8, 9, 10, 11, 12), insbesondere eines Mähdreschers (1), gesteuert oder geregelt wird.
